# EUROPEAN PATENT APPLICATION

(11) **EP 4 609 979 A1**
(43) Date of publication of application: **03.09.2025**
(21) Application number: 22955898.6
(22) Date of filing: 25.10.2022
(51) Int. Cl.: B23K 9/10, B23K 9/32

(54) **WELDING MACHINE, WELDING GUN, WELDING SYSTEM, AND WELDING GUN CONTROL METHOD**

(71) Applicant: Shenzhen Jasic Technology Co., Ltd., Pingshan District Shenzhen Guangdong 518000 (CN); JASIC TECHNOLOGY EUROPE S.R.L., 20121 Milano (IT)
(72) Inventor: PAN, Lei, Guangdong 518000 (CN); TERZO, Maurizio, Guangdong 518000 (CN); LI, Zhigang, Guangdong 518000 (CN)
(74) Representative: Ehrner & Delmar Patentbyrå AB
(86) International application number: PCT/CN2022/127501
(87) International publication number: WO 2024/087037

(57) **Abstract**

A welding machine, a welding torch, a welding system, and a welding torch control method are provided in the present application. In the welding system, an electrical signal connection is established between the welding machine and the welding torch through wires, the welding machine utilizes the electrical signal connection to supply power to the welding torch, and recognizes the type of the welding torch according to an electrical signal received from the welding torch to obtain a welding torch type recognition result, and perform an adaptive adjustment on the specific function of the welding torch according to the welding torch type recognition result. By implementing the welding system and the welding torch control method proposed by the present application, the welding torch may have three welding torch control functions of traditional common traditional mode control, analog control and digital control without the need of arranging extra wires in the welding machine and the welding torch or improving the existing wiring design of the traditional welding torch. Moreover, the welding machine may be perfectly compatible with traditional welding torches, analog welding torches and digital welding torches.

## Description

### TECHNICAL FIELD

The present application relates to the field of welding torch technologies, and more particularly, to a welding machine, a welding torch, a welding system and a welding torch control method.

### BACKGROUND

A conventional welding torch usually has two wires connected to a welding torch switch button. In order to achieve a digital control function of a welding torch, problems of data communication and supply voltage signal transmission between a welding machine (also referred to as a welding cabinet) and a welding torch needs to be solved, and some additional wires need to be added accordingly. In the related art, internal wirings of the welding machine and the traditional welding torch needs to be improved in order to realize a digital welding torch, additional wires are arranged in the welding machine and the traditional welding torch, in order that data transmission and supply voltage signal transmission between the welding machine and the welding torch are performed through the additionally arranged wires, and the welding torch is provided with the digital control function. However, this arrangement can also cause the welding machine to become a dedicated or customized welding machine, which causes a loss of compatibility of the welding machine, and thereby causes the improved welding torch to be only adaptive to such dedicated or customized welding machine.

Thus, how to realize standard control, analog control and digital control of the welding torch without changing internal wiring designs of the welding machine and the traditional welding torch has become a technical problem that needs to be solved urgently in this field.

### TECHNICAL PROBLEM

The technical problem to be solved by the present application is to provide an improved welding machine, an improved welding torch, an improved welding torch control method and an improved welding system, which can skillfully utilize two wires of the traditional welding torch as the wire for supplying power and the wire for electric signal transmission so as to realize common traditional mode control, analog control and digital control of the welding torch simultaneously, without changing the internal wiring designs of the welding machine and the traditional welding torch.

### TECHNICAL SOLUTIONS

In order to solve the aforementioned technical problem, the technical solutions adopted by the present application are described below:
In accordance with the first aspect, a welding system includes a welding machine and a welding torch electrically connected with the welding machine, the welding machine is configured to supply power to the welding torch through an electrical signal connection established between the welding machine and the welding torch, and recognize a type of the welding torch according to an electric signal received from the welding torch to obtain a welding torch type recognition result, and perform an adaptive adjustment on a specific function of the welding torch according to the welding torch type recognition result.

In one preferable embodiment of the first aspect, the welding torch includes a welding torch control circuit, the welding torch control circuit includes a welding torch type recognition circuit mounted in a welding torch handle and an input circuit connected between the welding torch type recognition circuit and the welding machine.

The input circuit includes the first wire and the second wire configured for establishing the electrical signal connection between the welding torch and the welding machine. One end of the first wire and one end of the second wire are connected to a welding torch port for connecting to the welding machine, the other end of the first wire and the other end of the second wire are connected to an input of the input circuit.

In one preferable embodiment of the first aspect, the welding torch type recognition circuit includes a first slot for receiving an analog plug-in module and a second slot for receiving a digital plug-in module.

Where, the welding machine is specifically configured to trigger an execution of a recognition operation on the type of the welding torch according to insertion conditions of the first slot and the second slot, obtain the welding torch type recognition result by looking-up a table, and perform an adaptive adjustment on the specific function of the welding torch according to the welding torch type recognition result.

In one preferable embodiment of the first aspect, the welding machine is specifically configured to:
check whether the electrical signal from the welding torch type recognition circuit is received;
obtain, if the electrical signal is received from the welding torch type recognition circuit, a first welding torch type recognition result according to the electrical signal and a pre-stored first correspondence table, recognize the welding torch as a digital welding torch, and switching to a digital control mode;
check, if the electrical signal is not received from the welding torch type recognition circuit, whether a resistance value exists between the first wire and the second wire, and read the resistance value existing between the first wire and the second wire; look up the table according to the measured resistance value and a pre-stored second correspondence table to obtain a second welding torch type recognition result corresponding to the measured resistance value, and switch to the analog control mode, if there exists the resistance value between the first wire and the second wire and the read resistance value is within a preset resistance value range; determine that the welding torch is not included in welding torches of specified product models/series, do not trigger the execution of the recognition operation on the type of the welding torch, and do not perform an adaptive adjustment operation on the specific function of the welding torch, if the resistance value between the first wire and the second wire is read and it is confirmed that the resistance value exceeds the preset resistance value range;
where the second correspondence table contains one-to-one correspondence relationship between multiple resistance values between the first wire and the second wire and various types of analog welding torches.

In one preferable embodiment of the first aspect, the welding machine is further configured to recognize the welding torch as a common welding torch and enable the welding torch to be operated in a traditional common mode, when detecting that the analog plug-in module is not inserted into the first slot and that the digital plug-in module is not inserted into the second slot.

In one preferable embodiment of the first aspect, the welding torch type recognition circuit is provided with a first slot for receiving the analog plug-in module and a second slot for receiving the digital plug-in module, and is configured to be recognizable by the welding machine through the electrical signal between the first wire and the second wire, when detecting that the analog plug-in module is inserted into the first slot or detecting that the digital plug-in module is inserted into the second slot.

In one preferable embodiment of the first aspect, the input circuit includes:
a filter sub-circuit configured to filter supply voltage signals provided by the welding machine; and
a rectifier sub-circuit configured to rectify the supply voltage signals and output direct current (DC) voltages;
a voltage stabilizer sub-circuit configured to read an average voltage value of the DC voltages output by the rectifier sub-circuit, determine whether the average voltage value reaches a preset DC voltage threshold value, and interrupt a voltage signal transmission between the input circuit and the welding torch type recognition circuit when the average voltage value is lower than the preset DC voltage threshold value; the voltage stabilizer sub-circuit is further configured to restore the voltage signal transmission between the input circuit and the welding torch type recognition circuit again when detecting that the DC voltage output by the rectifier sub-circuit reaches the preset DC voltage threshold value again;
a key sub-circuit connected to a welding torch switch through the first wire and the second wire.

In accordance with the second aspect, a welding machine is provided in the present application. An electrical signal connection is established between the welding machine and a welding torch through a first wire and a second wire, the welding machine is configured to supply power to the welding torch through the electric signal connection and recognize a type of the welding torch according to an electric signal received from the welding torch to obtain a welding torch type recognition result, and perform an adaptive adjustment on a specific function of the welding torch according to the welding torch type recognition result.

In one preferable embodiment of the second aspect, one end of the first wire and one end of the second wire are connected to a welding torch port for connecting to the welding machine, the other end of the first wire and the other end of the second wire are connected to an input circuit of the welding torch.

In one preferable embodiment of the second aspect, the welding machine is specifically configured to: trigger an execution of recognition operation on a type of the welding torch according to insertion conditions of a first slot and a second slot of the welding torch, obtain a welding torch type recognition result by looking up a table, and perform the adaptive adjustment on the specific function of the welding torch according to the welding torch type recognition result.

In one preferable embodiment of the second aspect, the welding machine is specifically configured to:
check whether an electrical signal from the welding torch is received;
obtain a first welding torch type recognition result according to the electrical signal and a pre-stored first correspondence table, recognize the welding torch as a digital welding torch, and switch to a digital control mode, if the electrical signal from the welding torch is not received;
check whether there exists a resistance value between the first wire and the second wire, and read the resistance value existing between the first wire and the second wire, if the electrical signal from the welding torch is not received; look up the table according to the measured resistance value and a pre-stored second correspondence table to obtain a second welding torch type recognition result corresponding to the measured resistance value, and switch to an analog control mode, if the resistance value existing between the first wire and the second wire is read, and the resistance value is determined as being within a preset resistance value range; determine that the welding torch is not included in welding torches of specified product models/series, do not trigger the execution of the recognition operation on the type of the welding torch, and do not perform an adaptive adjustment operation on the specific function of the welding torch, if the resistance value between the first wire and the second wire is read, and it is confirmed that the resistance value exceeds the preset resistance value range;
the second correspondence table includes a one-to-one correspondence between multiple resistance values between the first wire and the second wire and various types of analog welding torches.

In one preferable embodiment of the second aspect, the welding machine is further configured to recognize the welding torch as a common welding torch so as to enable the welding torch to be operated in a traditional common mode, when it is detected that the analog plug-in module is not inserted into the first slot of the welding torch and the digital plug-in module is not inserted into the second slot of the welding torch.

In accordance with the third aspect, a welding torch is further provided in the present application, the welding torch includes a welding torch control circuit, where the welding torch control circuit includes a welding torch type recognition circuit mounted in a welding torch handle, and an input circuit connected between the welding torch type recognition circuit and a welding machine.

Where, the input circuit includes a first wire and a second wire configured to establish an electrical signal connection between the welding torch and the welding machine.

The welding torch type recognition circuit is provided with a first slot for receiving an analog plug-in module and a second slot for receiving a digital plug-in module, and is configured to be recognizable by the welding machine through an electrical signal between the first wire and the second wire, when detecting that the analog plug-in module is inserted into the first slot or detecting that the digital plug-in module is inserted into the second slot.

In one preferable embodiment of the third aspect, one end of the first wire and one end of the second wire are connected to a welding torch port for connecting to the welding machine, the other end of the first wire and the other end of the second wire are connected to an input of the input circuit.

In one preferable embodiment of the third aspect, the welding torch type recognition circuit further includes an interface electrically connected to the analog plug-in module inserted into the first slot or the digital plug-in module inserted into the second slot.

In accordance with the fourth aspect, a welding torch control method is provided in the present application. Where the welding torch control method is implemented on a welding machine, the welding torch includes a welding torch control circuit, the welding torch control circuit includes a welding torch type recognition circuit mounted in a welding torch handle, and an input circuit, the input circuit includes a first wire and a second wire configured to establish an electrical signal connection between the welding machine and the welding torch, the welding torch type recognition circuit includes a first slot for receiving an analog plug-in module and a second slot for receiving a digital plug-in module. Where, the method includes following steps of:
utilizing the electrical signal connection established between the welding machine and the welding torch to supply power to the welding torch, and recognizing a type of the welding torch according to an electrical signal received from the welding torch to obtain a welding torch type recognition result, and performing an adaptive adjustment on a specific function of the welding torch according to the welding torch type recognition result.

In one preferable embodiment of the fourth aspect, the step of recognizing the type of the welding torch according to the electrical signal received from the welding torch to obtain the welding torch type recognition result, and performing the adaptive adjustment on the specific function of the welding torch according to the welding torch type recognition result includes:
triggering an execution of a recognition operation on the type of the welding torch and obtaining the welding torch type recognition result by looking up a table, when detecting that the analog plug-in module is inserted into the first slot or detecting that the digital plug-in module is inserted into the second slot;
performing the adaptive adjustment on the specific function of the welding torch according to the welding torch type recognition result.

In one preferable embodiment of the fourth aspect, the step of triggering the execution of the recognition operation on the type of the welding torch and obtaining the welding torch type recognition result by looking up the table, when detecting that the analog plug-in module is inserted into the first slot or detecting that the digital plug-in module is inserted into the second slot includes:
checking whether the electrical signal from the welding torch type recognition circuit is received;
obtaining the first welding torch type recognition result according to the electrical signal and a pre-stored first correspondence table, recognizing the welding torch as a digital welding torch, and switching to a digital control mode, if the electrical signal from the welding torch type recognition circuit is received;
checking whether there exists a resistance value between the first wire and the second wire, and reading the resistance value existing between the first wire and the second wire, if the electrical signal from the welding torch type recognition circuit is not received; looking up the table according to the measured resistance value and a pre-stored second correspondence table to obtain a second welding torch type recognition result corresponding to the measured resistance value, and switching to the analog control mode, if the resistance value existing between the first wire and the second wire is read out and the resistance value is within a preset resistance value range; confirming that the welding torch is not included in welding torches of specified product models/series, do not triggering the execution of the recognition operation on the type of the welding torch, and do not performing an adaptive adjustment operation on the specific function of the welding torch, if the resistance value between the first wire and the second wire is read out and it is confirmed that the resistance value exceeds the preset resistance value range;
where, the second correspondence table includes a one-to-one correspondence relationship between multiple resistance values between the first wire and the second wire and various types of analog welding torches.

In one preferable embodiment of the fourth aspect, the step of recognizing the type of the welding torch according to the electric signal received from the welding torch to obtain the welding torch type recognition result, and performing the adaptive adjustment on the specific function of the welding torch according to the welding torch type recognition result further includes:
enabling the welding torch to be operated in a traditional common mode, when detecting that the analog plug-in module is not inserted into the first slot to be electrically connected to the welding torch type recognition circuit, and that the digital plug-in module is not inserted into the second slot to be electrically connected to the welding torch type recognition circuit.

In one preferable embodiment of the fourth aspect, the step of utilizing the electrical signal connection to supply power to the welding torch includes:
performing a filtering processing on supply voltage signals provided by the welding machine through a filter sub-circuit of the input circuit;
rectifying the supply voltage signals and outputting direct current (DC) voltages through a rectifier sub-circuit of the input circuit; and
by the voltage stabilizer sub-circuit of the input circuit, reading an average voltage value of the DC voltages output by the rectifier sub-circuit, determining whether the average voltage value reaches a preset DC voltage threshold value, and interrupting a voltage signal transmission between the input circuit and the welding torch type recognition circuit when the average voltage value is lower than the preset DC voltage threshold value, and restoring the voltage signal transmission between the input circuit and the welding torch type recognition circuit, when detecting that the DC voltage output by the rectifier circuit reaches the preset DC voltage threshold value again.

### BENEFICIAL EFFECTS

The welding machine, the welding torch, the welding torch control method and the welding system provided by the present application at least have the following beneficial effects:
First, the first wire/the second wire connected between the welding machine and the welding torch are utilized to transmit the supply voltage signal provided by the welding machine to supply power to the welding torch type recognition circuit. Additionally, the first wire and the second wire are also utilized to receive and transmit electric signals. Thus, it is unnecessary to additionally add wires into the welding machine or the traditional welding torch or change the internal wiring design of the welding machine or the traditional welding torch. Thus, the welding machine can be compatible with all types of welding torches by implementing the welding machine, the welding torch, the welding torch control method and the welding system provided by the present application.
Second, since the welding torch control circuit of the present application is provided with corresponding slots, a user can replace different intelligent control components (i.e., the analog plug-in module and the digital plug-in module) for the welding torch so as to provide the welding torch with the function corresponding to the inserted intelligent control component, according to the requirement of the function of the welding torch. The welding machine may trigger the welding torch type recognition circuit to recognize the type of the welding torch according to insertion conditions of the first slot and the second slot, obtain an accurate welding torch type recognition result by looking up the table, and perform the adaptive adjustment on the specific function of the welding torch according to the obtained welding torch type recognition result. Thus, the user can replace different intelligent control components for the welding torch according to the function of the welding torch, in order to provide the welding torch with different control functions, the welding torch can be operated in the traditional common mode, or in the analog control mode, or in the digital control mode, multiple different functions are provided to the user, and diversified requirements of different users are well satisfied.
Third, the welding machine provided by the present application has excellent compatibility, and the welding machine can not only be compatible with various welding torches of different models, but also recognize three welding torches connected to the welding machine simultaneously.
Fourth, the welding torch is provided with a voltage stabilization protection mechanism. In particular, the signal transmission between the welding machine and the input circuit of the welding machine control circuit can be optimized through the voltage stabilization function provided by the voltage stabilizer sub-circuit of the input circuit of the welding torch. Thus, it is ensured that a stable operating voltage can be provided to the welding torch type recognition circuit when the supply voltage provided by the welding machine is undervoltage, and the operational stability of the whole welding torch control circuit can be improved.

### DESCRIPTION OF THE DRAWINGS

The welding machine, the welding torch, the welding torch control method and the welding system of the present application are described below with reference to the accompanying drawings and the embodiments, wherein:
FIG. 1 illustrates a structural block diagram of a welding system according to one preferable embodiment of the present application;
FIG. 2 illustrates a structural block diagram of a welding torch control circuit inserted with an analog plug-in module according to one preferable embodiment of the present application;
FIG. 3 illustrates a structural block diagram of a welding torch control circuit inserted with a digital plug-in module according to one preferable embodiment of the present application;
FIG. 4 illustrates a circuit diagram of the welding torch control circuit inserted with the digital plug-in module according to one preferable embodiment of the present application;

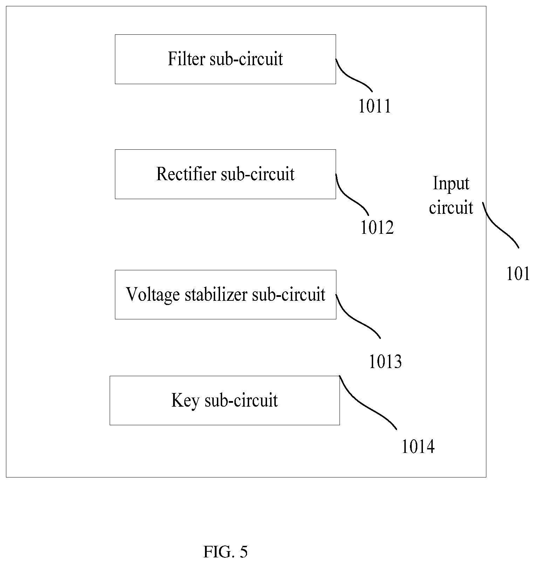

FIG. 5 illustrates a structural block diagram of an input circuit of a welding torch control circuit according to one preferable embodiment of the present application;

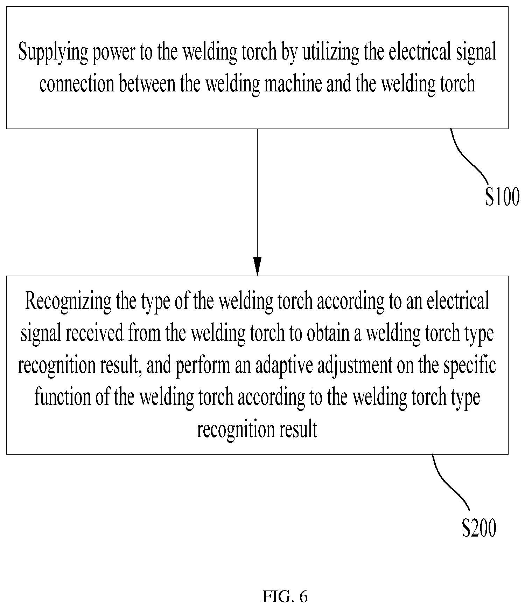

FIG. 6 illustrates a flowchart of a welding torch control method according to one preferable embodiment of the present application;
FIG. 7 illustrates an implementation flowchart of a solution for voltage stabilization protection contained in the welding torch control method shown in FIG. 6; and
FIG. 8 illustrates an implementation flowchart of a solution for recognizing the type of the welding torch contained in the welding torch control method shown in FIG. 6.

### EMBODIMENTS OF THE PRESENT INVENTION

In order to make the objective, the technical solutions and the technical effects of the present application be clearer, the present application will be further described in detail below with reference to the accompanying figures and the embodiments. It should be understood that, the embodiments described in detail herein are merely intended to interpret but not to limit the present application.

In order to solve the technical defects in the related art that it needs to additionally arrange wires in the welding machine 200 and the traditional welding torch 300 to improve the internal wiring in the welding machine 200 and the traditional welding torch 300, and to perform data transmission and supply voltage signal transmission between the welding machine 200 and the welding torch 300, in order to realize digital control of the welding torch 300, the additionally arranged wires cause the welding machine 200 to become a dedicated or customized welding machine 200, causes the welding machine 200 to lose its compatibility, and thus causes the improved welding torch 300 to be only adaptive to said dedicated or customized welding machine 200, the innovations of the present application lie in:
First, the first wire and the second wire which establishes the electrical signal connection between the welding machine 200 and the welding torch 300 are utilized to transmit the supply voltage signal provided by the welding machine 200, in order to supply power to the welding torch 300. The first wire and the second wire are also used to receive and transmit signals. Thus, it is unnecessary to additionally add wires in the welding machine 200 or the traditional welding torch 300, and it is also unnecessary to change the design of internal wiring of the welding machine 200 and the traditional welding torch 300. Thus, by applying the welding torch control circuit 100 provided in the present application, the welding machine 200 is enabled to be compatible with all types of welding torches 300.
Second, corresponding slots are provided on the welding torch control circuit 100 of the welding torch 300, thus, a user is facilitated to replace different intelligent control components (i.e., the analog plug-in module 103 and the digital plug-in module 104) for the welding torch 300 to provide the welding torch 300 with the function corresponding to the inserted intelligent control component, according to a function requirement of the welding torch 300. Thus, the user can replace different intelligent control components for the welding torch 300 to provide the welding torch 300 with different control functions, according to the functional requirement of the welding torch 300. In this way, the welding torch 300 can be operated in a traditional common mode, or in an analog control mode, or in a digital control mode, the user is provided with a plurality of different functions and diversified requirements of different users are met.
Third, the welding torch control circuit 100 has a voltage stabilization protection mechanism, that is, signal transmission between the welding machine 200 and the input circuit 101 of the welding torch control circuit 100 can be optimized through the voltage stabilization adjustment function provided by the voltage stabilizer sub-circuit 1013 of the input circuit 101 when the supply voltage provided by the welding machine 200 is undervoltage. Thus, it is ensured that a stable operating voltage can be provided for the welding torch type recognition circuit 102, and the operational stability of the whole welding torch control circuit 100 is improved.

The present application will be described in detail below with reference to the accompanying drawings and the embodiments:

### First embodiment

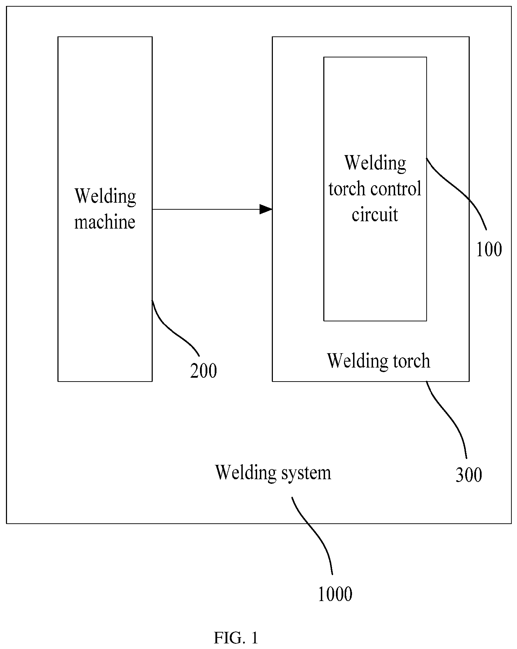

As shown in FIG. 1, a welding system 1000 is provided in the present application, the welding system 1000 is used to utilize two wires connected between the welding torch 300 and the welding machine 200 to recognize the type of the welding torch 300, and perform an adaptive adjustment on the function of the welding torch 300 according to the welding torch type recognition result, the welding torch 300 is enabled to be operated in a traditional common mode or an analog control mode or a digital control mode, the functions of the common welding torch 300, the analog welding torch 300 and the digital welding torch 300 are achieved respectively.

In particular, the welding system 1000 includes a welding machine 200 and a welding torch 300, the welding machine 200 establishes an electrical signal connection with the welding torch 300. The welding machine 200 is configured to supply power to the welding torch 300 through the electrical signal connection established between the welding torch 300 and the welding machine 200, and recognize the type of the welding torch 300 according to the electrical signal received from the welding torch 300 to obtain a welding torch type recognition result, and perform an adaptive adjustment on the specific function of the welding torch 300 according to the welding torch type recognition result.

Preferably, the welding torch 300 includes a welding torch control circuit 100. The welding torch control circuit 100 includes a welding torch type recognition circuit 102 mounted in a welding torch handle, and an input circuit 101 connected between the welding torch type recognition circuit 102 and the welding machine 200.

The input circuit 101 includes a first wire and a second wire for establishing the electrical signal connection between the welding torch 300 and the welding machine 200. One end of the first wire and one end of the second wire are connected to a welding torch port for connecting to the welding machine 200, the other end of the first wire and the other end of the second wire are connected to an input of the input circuit 101.

Preferably, the welding torch type recognition circuit 102 further includes a first slot for receiving the analog plug-in module 103 and a second slot for receiving the digital plug-in module 104.

The welding machine 200 is specifically configured to trigger execution of a recognition operation on a type of the welding torch 300 according to insertion conditions of the first slot and the second slot, obtain a welding torch type recognition result by looking up a table, and adjust a specific function of the welding torch 300 adaptively according to the welding torch type recognition result.

Preferably, the welding machine 200 is specifically configured to check whether an electrical signal from the welding torch type recognition circuit 102 is received; obtain a first welding torch type recognition result according to the electrical signal and a pre-stored first correspondence table if the electrical signal from the welding torch type recognition circuit 102 is received, recognize the welding torch 300 as a digital welding torch 300, and switch to a digital control mode; check whether there exists a resistance value between the first wire and the second wire, and read the resistance value existing between the first wire and the second wire if the electrical signal from the welding torch type recognition circuit 102 is not received; look up the table according to the measured resistance value and the pre-stored second correspondence table to obtain a second welding torch type recognition result corresponding to the measured resistance value, and switch to the analog control mode, if the resistance value exists between the first wire and the second wire and the resistance value is within the preset resistance value range; determine that the welding torch 300 is not included in welding torches 300 of the specific product models/series, do not trigger the execution of the recognition operation of the type of the welding torch 300, and do not perform an adaptive adjustment operation on the specific function of the welding torch 300, if the resistance value between the first wire and the second wire is read out and it is confirmed that the resistance value exceeds the preset resistance value range.

The second correspondence table includes one-to-one correspondence relationship between multiple resistance values between the first wire and the second wire and various types of analog welding torches.

Table a illustrates one-to-one correspondence relationship between multiple resistance values between the first wire and the second wire and various types of analog welding torches, as shown below.

| Resistance values (Ω) | Welding torch 300 product series | Types of welding torch | Specific model |
|---|---|---|---|
| > 10000 | Traditional torch 300 | Traditional | None |
| 6800 | Analog TER series | Analog | Gas 250A |
| 10000 | Analog TER series | Analog | Gas 350A |
| 2700 | Analog Evolve series | Analog | Gas 250A |
| 1500 | Analog Evolve series | Analog | Gas 350A |
| 1000 | Analog Evolve series | Analog | Gas 500A |
| 680 | Analog Evolve series | Analog | Water 350A |
| 470 | Analog Evolve series | Analog | Water 500A |
| 330 | Analog Evolve series | Analog | special 300A |
| 220 | Analog Evolve series | Analog | special 400A |
| 150 | Analog Evolve series | Analog | special 500A |

Preferably, the welding machine 200 is further configured to recognize the welding torch 300 as a common welding torch 300 to enable the welding torch 300 to be operated in a traditional common mode, when failing to detect the analog plug-in module 103 inserted into the first slot and failing to detect the digital plug-in module 104 inserted into the second slot.

Preferably, the welding torch type recognition circuit 102 has a first slot for receiving the analog plug-in module 103 and a second slot for receiving the digital plug-in module 104, and is configured to be recognizable by the welding machine 200 through the electrical signal between the first wire and the second wire when detecting that the analog plug-in module 103 is inserted into the first slot or detecting that the digital plug-in module 104 is inserted into the second slot.

Preferably, the input circuit 101 includes:
a filter sub-circuit 1011 configured to filter a supply voltage signal provided by the welding machine 200;
a rectifier sub-circuit 1012 configured to rectify the supply voltage signal and output a direct current (DC) voltage;
a voltage stabilizer sub-circuit 1013 configured to: read an average voltage value of DC voltages output by the rectifier sub-circuit 1012, determine whether the average voltage value reaches a preset direct current voltage threshold value, and interrupt a voltage signal transmission between the input circuit 101 and the welding torch type recognition circuit 102 when the average voltage value is lower than the preset direct current voltage threshold value; and restore the voltage signal transmission between the input circuit 101 and the welding torch type recognition circuit 102 when detecting that the DC voltage output by the rectifier sub-circuit 1012 reaches the preset DC voltage threshold value again;
a key sub-circuit 1014 connected to a welding torch switch through the first wire and the second wire.

### Second embodiment

Corresponding to the aforesaid welding system 1000, a welding machine 200 is further proposed correspondingly in the present application. The welding machine 200 includes, but is not limited to, a metal-inert gas (MIG) welding cabinet, a tungsten inert gas (TIG) welding cabinet, a plasma cutting cabinet, a plasma welding cabinet, and other similar welding cabinet.

The welding machine 200 establishes an electrical signal connection with the welding torch 300 through the first wire and the second wire, and 200 is configured to supply power to the welding torch 300 through the electrical signal connection, recognize the type of the welding torch 300 according to the electrical signal received from the welding torch 300, obtain a welding torch type recognition result, and adjust the specific function of the welding torch 300 adaptively according to the welding torch type recognition result.

One end of the first wire and one end of the second wire are connected to a welding torch port for connecting to the welding machine 200, the other end of the first wire and the other end of the second wire are connected to the input circuit 101 of the welding torch 300.

The welding machine 200 is specifically configured to trigger an execution of a recognition operation of the type of the welding torch 300 according to insertion conditions of the first slot and the second slot of the welding torch 300, obtain the welding torch type recognition result by looking up a table, and adjust the specific function of the welding torch 300 adaptively according to the welding torch type recognition result.

Preferably, the welding machine 200 is specifically configured to:
check whether an electrical signal from the welding torch 300 is received;
obtain a first welding torch type recognition result according to the electrical signal and a pre-stored first correspondence table, recognize the welding torch 300 as a digital welding torch 300, and switch to a digital control mode, if the electrical signal from the welding torch type is received;
if the electrical signal from the welding torch 300 is not received, check whether there exists a resistance value between the first wire and the second wire, and read the resistance value existing between the first wire and the second wire; look up the table according to the measured resistance value and the pre-stored second correspondence table to obtain a second welding torch type recognition result corresponding to the measured resistance value, and switch to an analog control mode, if the resistance value existing between the first wire and the second wire is read out and the resistance value is determined to be within a preset resistance value range; determine that the welding torch 300 is not included in welding torches 300 of specific product models/series, do not trigger the execution of the recognition operation of the type of the welding torch 300, and do not perform the adaptive adjustment operation on the specific function of the welding torch 300, if the resistance value between the first wire and the second wire is read out, and it is confirmed that the resistance value exceeds the preset resistance value range.

The second correspondence table includes one-to-one correspondence relationship between multiple resistance values between the first wire and the second wire and various types of analog welding torches (as shown in the table a listed above).

Preferably, the welding machine 200 is further configured to recognize the welding torch 300 as a common welding torch 300 to enable the welding torch 300 to be operated in a traditional common mode, when failing to detect the analog plug-in module 103 inserted into the first slot and the digital plug-in module 104 inserted into the second slot.

### Third Embodiment

Corresponding to the welding system 1000 disclosed in the first embodiment , a welding torch 300 is further proposed in the present application correspondingly, the welding torch 300 includes a welding torch control circuit 100. In particular, the welding torch control circuit 100 includes a welding torch type recognition circuit 102 mounted in a welding torch handle, and an input circuit 101 connected between the welding torch type recognition circuit 102 and the welding machine 200.

The input circuit 101 includes a first wire and a second wire for establishing an electrical signal connection between the welding torch 300 and the welding machine 200.

The welding torch type recognition circuit 102 has a first slot for receiving an analog plug-in module 103 and a second slot for receiving a digital plug-in module 104, and is configured to be recognizable by the welding machine 200 through an electrical signal between the first wire and the second wire when detecting the analog plug-in module 103 inserted into the first slot or detecting the digital plug-in module 104 inserted into the second slot.

Preferably, one end of the first wire and one end of the second wire are connected to a welding torch port for connecting to the welding machine 200, the other end of the first wire and the other end of the second wire are connected to an input of the input circuit 101.

Preferably, the welding torch type recognition circuit 102 further includes an interface electrically connected to the analog plug-in module 103 inserted into the first slot or electrically connected to the digital plug-in module 104 inserted into the second slot.

Since the first slot for receiving the analog plug-in module 103 and the second slot for receiving the digital plug-in module 104 are provided in the welding torch type recognition circuit 102, a user can select to insert the analog plug-in module 103 into the first slot to achieve an analog control function of the welding torch 300, or select to replace the analog plug-in module 103 with the digital plug-in module 104 (i.e., the user selects to insert the digital plug-in module 104 into the second slot) to realize a digital control function of the welding torch 300.

Preferably, the input circuit 101 includes:
a filter sub-circuit 1011 configured to filter the supply voltage signals provided by the welding machine 200;
a rectifier sub-circuit 1012 configured to rectify the supply voltage signals and output direct current (DC) voltages;
a voltage stabilizer sub-circuit 1013 configured to read an average voltage value of the DC voltages output by the rectifier sub-circuit 1012, determine whether the average voltage value reaches a preset DC voltage threshold value, and interrupt a signal transmission between the input circuit 101 and the welding torch type recognition circuit 102 when the average voltage value is lower than a preset DC voltage threshold value, and restore the signal transmission between the input circuit 101 and the welding torch type recognition circuit 102 when detecting that the DC voltage output by the rectifier sub-circuit 1012 reaches the preset direct current voltage threshold value again;
a key sub-circuit 1014 connected to the welding torch switch through the first wire and the second wire.

Thus, a voltage stabilization protection mechanism is provided for the welding torch 300 through the input circuit 101. The signal transmission between the welding machine 200 and the input circuit 101 of the welding torch control circuit 100 can be optimized through the voltage stabilization adjustment function provided by the voltage stabilizer sub-circuit 1013 of the input circuit 101 when the supply voltage provided by the welding machine 200 is undervoltage. Thus, it is ensured that a stable operating voltage can be provided for the welding torch type recognition circuit 102, and the operational stability of the whole welding torch control circuit 100 is improved.

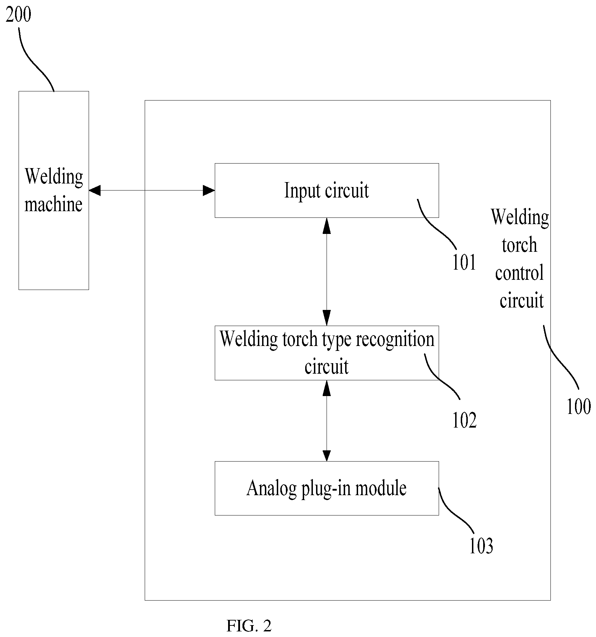

The arrangement of the analog welding torch 300 and the implementation principle thereof are described below:
In one preferable embodiment of the present application, a structural block diagram of the welding torch control circuit 100 of the welding torch 300 in the analog control mode (as shown in FIG. 2) is illustrated. Particularly, when the analog plug-in module 103 is inserted into the first slot of the welding torch control circuit 100, the welding machine 200 can recognize the welding torch 300 as an analog welding torch 300 having an analog user interface and an analog control function.

Preferably, one end of the first wire of the input circuit 101 and one end of the second wire of the input circuit 101 are connected to the welding machine 200, the other end of the first wire of the input circuit 101 and the other end of the second wire of the input circuit 101 are connected to the input of the input circuit 101. In addition, the welding torch type recognition circuit 102 further includes an interface that is electrically connected to the analog plug-in module 103 inserted into the first slot or electrically connected to the digital plug-in module 104 inserted into the second slot. When the interface is not connected to the analog plug-in module 103 or the digital plug-in module 104, the interface has a closed wire harness. When the interface needs to be connected to the analog plug-in module 103 or the digital plug-in module 104, the closed wire harness is removed. By adopting this output interface design, the user can conveniently replace the analog plug-in module 103 or the digital plug-in module 104 through the slots of the welding torch type recognition circuit 102, thereby switching the welding torch 300 to the analog welding torches 300 or the digital welding torch 300.

The first welding torch type recognition result at least includes a series of products to which the welding torch belongs, a welding torch type, and a welding torch model. The first correspondence table is used to reflect the one-to-one correspondence relationship between multiple resistance values between the first wire and the second wire and various types of analog welding torches (as shown in the table a above).

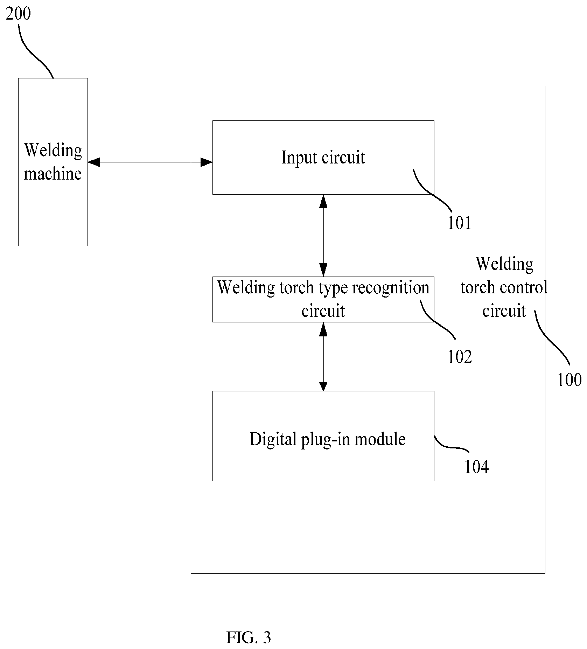

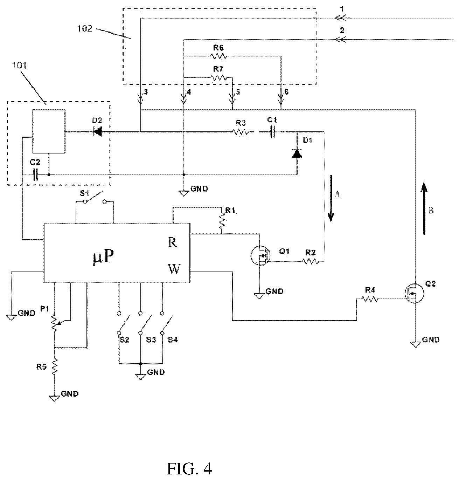

The arrangement of the digital welding torch 300 and the implementation principle thereof are described below:
In another preferable embodiment of the present application, a structural block diagram (as shown in FIG. 3) of the welding torch control circuit 100 of the welding torch 300 in a digital control mode is shown. As shown in FIG. 3, the digital plug-in module 104 is inserted into the second slot of the welding torch control circuit 100, and the welding machine 200 can recognize the welding torch 300 as the digital welding torch 300 with a digital user interface and a digital control function. FIG. 4 further illustrates a circuit diagram of the welding torch control circuit 100.

The arrangement of the conventional welding torch 300 operating in the conventional normal mode and the implementation principle thereof are described below:
When the welding machine 200 does not detect that any plug-in module (i.e., the analog plug-in module 103 or the digital plug-in module 104) is inserted into the corresponding slot of the welding torch type recognition circuit 102, or when the analog plug-in module 103 previously inserted into the first slot or the digital plug-in module 104 previously inserted into the second slot is pulled out by the user, the welding machine 200 proposed in the present application will enable the welding torch 300 to be operated in a traditional common mode, thereby implementing the control function of the welding torch 300 in the traditional common traditional mode. Particularly, when the welding machine 200 does not detect the analog plug-in module 103 inserted into the first slot or does not detect the digital plug-in module 104 inserted into the second slot, the welding torch 300 will be controlled to be operated in the traditional common mode. In this condition, the welding torch 300 according to the present application is the traditional welding torch 300 which has the functions corresponding to the traditional welding torch 300.

### Fourth embodiment

Corresponding to the welding system 1000 disclosed in the first embodiment, a welding torch control method implemented by the welding machine 200 is further proposed in the present application correspondingly.

An electrical signal connection is established between the welding machine 200 and the welding torch 300 through wires. The welding torch 300 includes a welding torch control circuit 100, the welding torch control circuit 100 further includes a welding torch type recognition circuit 102 mounted in a welding torch handle, and an input circuit 101. The input circuit 101 has a first wire and a second wire for establishing an electrical signal connection between the welding machine 200 and the welding torch 300, and the welding torch type recognition circuit 102 has a first slot for receiving an analog plug-in module 103 and a second slot for receiving a digital plug-in module 104. The welding torch control method includes the following steps:
In a step of S100, an electrical signal connection between the welding machine 200 and the welding torch 300 is utilized to supply power to the welding torch 300.
In a step of S200, the type of the welding torch 300 is recognized according to an electrical signal received from the welding torch 300 and a welding torch type recognition result is obtained, and the specific function of the welding torch 300 is adaptively adjusted according to the welding torch type recognition result.

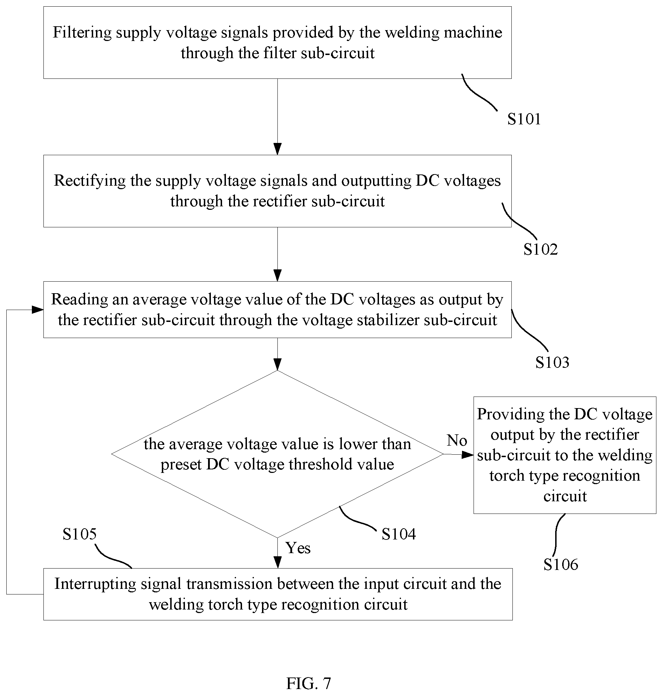

Furthermore, FIG. 7 illustrates a specific implementation flowchart of method steps of utilizing the electrical signal connection established between the welding machine 200 and the welding torch 300 to supply power to the welding torch 300. As shown in FIG. 7, the step S100 further includes:
In a step of S101, supply voltage signals provided by the welding machine 200 are filtered through a filter sub-circuit 1011.
In a step of S102, a rectifier sub-circuit 1012 is utilized to rectify the supply voltage signals and output direct current (DC) voltages;
In a step of S103, an average voltage value of the DC voltages output by the rectifier sub-circuit 1012 is read through a voltage stabilizer sub-circuit 1013.
In a step of S104, whether the average voltage value is lower than a preset DC voltage threshold value is determined; if the average voltage value is lower than the preset DC voltage threshold value, a step S106 is executed; if the average voltage value is greater than or equal to the preset DC voltage threshold value, a step S105 is executed;
In the step S105, a signal transmission between the input circuit 101 and the welding torch type recognition circuit 102 is interrupted, and the step S103 is returned.
In the step S106, the DC voltages output by the rectifier sub-circuit 1012 are supplied to the welding torch type recognition circuit 102.

It can be seen from the aforesaid steps that, the present application proposes a voltage stabilization protection mechanism, this voltage stabilization protection mechanism can temporarily interrupt the transmission when the supply voltage signal supplied by the welding machine 200 does not meet a predetermined requirement, thereby avoiding the risk to the supply voltage of the voltage stabilizer sub-circuit 1013. By applying this voltage stabilization protection mechanism, the quality of the transmission signal of the input circuit 101 can be guaranteed, and the operational stability of the input circuit 101 can be improved.

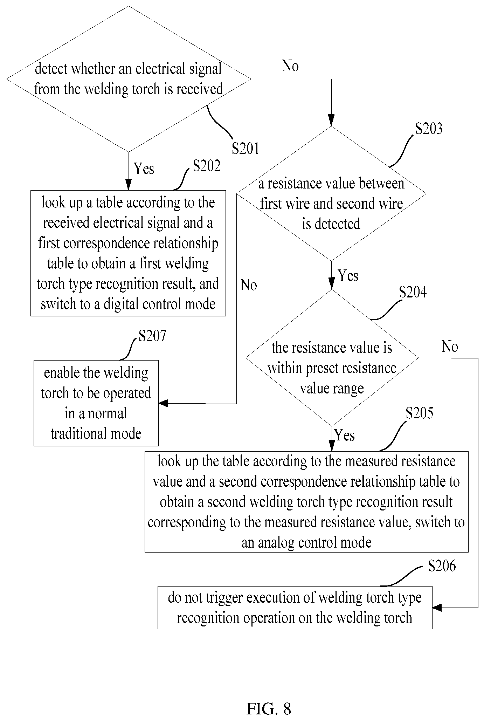

Furthermore, FIG. 8 illustrates a specific implementation flowchart of a solution for recognizing the type of the welding torch included in the welding torch control method of the present application. As shown in FIG. 8, the step S200 further includes:
In a step of S201, detecting whether an electrical signal from the welding torch type recognition circuit 102 of the welding torch 300100 is received; and if the electrical signal from the welding torch type recognition circuit 102 of the welding torch 300 is received by the welding machine 200, a step S202 is executed; otherwise, a step S203 is executed.
In the step of S202, a first welding torch type recognition result is obtained according to the received electric signal and a pre-stored first correspondence table, recognizing the welding torch 300 as a digital welding torch 300, and switching to a digital control mode.
In a step of S203, check whether there exists a resistance value between the first wire and the second wire. If the resistance value exists, a step S204 is executed; otherwise, a step S207 is executed.
In the step S204, if it is detected that the resistance value exists between the first wire and the second wire, the resistance value is read out, and whether the resistance value is within a preset resistance value range is determined. If it is determined that the measured resistance value is within the preset resistance value range, a step S205 is executed; otherwise, a step S206 is executed.
In the step S205, if the resistance value is within the preset resistance value range, a table is looked up according to the measured resistance value and the pre-stored second correspondence table to obtain a second welding torch type recognition result corresponding to the measured resistance value, and the welding torch 300 is switched to the analog control mode.
In the step S206, it is confirmed that the welding torch 300 is not included in the welding torches 300 of the specific product models/series, execution of the recognition operation on the type of the welding torch 300 is not trigged, and the adaptive adjustment operation is not performed on the specific function of the welding torch 300.
In a step of S207, the welding torch 300 is controlled to be operated in the traditional common mode.

In conclusion, as compared to the traditional welding torch 300, the improvements of the present application are at least embodied in the following aspects:
First, the welding machine 200 uses the first wire and the second wire to transmit the supply voltage signal provided by the welding machine 200 so as to supply power to the welding torch 300. Additionally, the welding machine 200 further utilizes the communication function of the first wire and the second wire to receive and transmit the electric signal between the welding machine 200 and the welding torch 300. Thus, there is no need to additionally add wires or change the existing wiring design. Thus, the welding machine 200 may be compatible with all types of welding torches 300.
Second, the corresponding slots are provided on the welding torch control circuit 100, so that the user is facilitated to replace different intelligent control components (i.e., the analog plug-in module 103 and the digital plug-in module 104) to provide the welding torch 300 with different functions. According to the present application, the welding machine 200 in the present application can trigger the execution of the recognition operation of the type of the welding torch 300 according to the insertion conditions of the first slot and the second slot, and obtain an accurate welding torch type recognition result by looking up the table, and perform the adaptive adjustment on the specific function of the welding torch 300 according to the obtained welding torch type recognition result. Thus, the user can change different intelligent control components to provide the welding torch 300 with different functions according to use requirement, the welding torch 300 is enabled to be operated in any one of the traditional common mode, the analog control mode and the digital control mode, the user is provided with the functions corresponding to the operating mode, and thus diversified requirements of different users are satisfied accordingly.
Third, the welding machine 200 according to the present application has excellent compatibility, and the welding machine 200 can not only be compatible with various welding torches 300 of different models, but also recognize three welding torches 300 connected to the welding machine 200 simultaneously.
Fourth, the welding torch 300 has the voltage stabilization protection mechanism, the signal transmission between the welding machine 200 and the input circuit 101 of the welding torch control circuit 100 is optimized through the voltage stabilization function provided by the voltage stabilizer sub-circuit 1013 of the input circuit 101 of the welding torch control circuit 100 when the supply voltage provided by the welding machine 200 is undervoltage. Thus, it is ensured that a stable operating voltage can be provided for the welding torch type recognition circuit 102, and the operational stability of the whole welding torch control circuit 100 is improved.

The embodiments of the present application have been described above with reference to the accompanying drawings. However, the present application is not limited to the aforesaid embodiments. The embodiments mentioned above are only illustrative rather than being restrictive. The person of ordinary skill in the art can also make many forms without departing from the principle and the protection scope of the claims of the present application under the enlightenment of the present application, these modifications are all included in the protection scope of the present application. Additionally, although some specified terms are used in the specification of the present application, these terms are only for the convenience of illustration and do not be constituted as any limitation to the present application.

## Claims

1. A welding system, comprising a welding machine and a welding torch electrically connected with the welding machine, **characterized in that**, the welding machine is configured to supply power to the welding torch through an electrical signal connection established by utilizing two wires (i.e., a first wire and a second wire) between the welding machine and the welding torch, and recognize a type of the welding torch according to an electric signal received from the welding torch to obtain a welding torch type recognition result, and perform an adaptive adjustment on a specific function of the welding torch according to the welding torch type recognition result.

2. The welding system according to claim 1, wherein the welding torch comprises a welding torch control circuit, the welding torch control circuit comprises a welding torch type recognition circuit mounted in a welding torch handle and an input circuit connected between the welding torch type recognition circuit and the welding machine;
the input circuit comprises the first wire and the second wire configured for establishing the electrical signal connection between the welding torch and the welding machine; wherein one end of the first wire and one end of the second wire are connected to a welding torch port for connecting to the welding machine, the other end of the first wire and the other end of the second wire are connected to an input of the input circuit.

3. The welding system according to claim 1, wherein the welding torch type recognition circuit comprises a first slot for receiving an analog plug-in module and a second slot for receiving a digital plug-in module;
wherein the welding machine is specifically configured to trigger an execution of a recognition operation on the type of the welding torch according to insertion conditions of the first slot and the second slot, obtain the welding torch type recognition result by looking-up a table, and perform an adaptive adjustment on the specific function of the welding torch according to the welding torch type recognition result.

4. The welding system according to claim 3, wherein the welding machine is specifically configured to:
check whether the electrical signal from the welding torch type recognition circuit is received;
obtain, if the electrical signal is received from the welding torch type recognition circuit, a first welding torch type recognition result according to the electrical signal and a pre-stored first correspondence table, recognize the welding torch as a digital welding torch, and switching to a digital control mode;
check, if the electrical signal is not received from the welding torch type recognition circuit, whether a resistance value exists between the first wire and the second wire, and read the resistance value existing between the first wire and the second wire; look up the table according to the measured resistance value and a pre-stored second correspondence table to obtain a second welding torch type recognition result corresponding to the measured resistance value, and switch to the analog control mode, if there exists the resistance value between the first wire and the second wire and the read resistance value is within a preset resistance value range; determine that the welding torch is not included in welding torches of specified product models/series, do not trigger the execution of the recognition operation on the type of the welding torch, and do not perform an adaptive adjustment operation on the specific function of the welding torch, if the resistance value between the first wire and the second wire is read and it is confirmed that the resistance value exceeds the preset resistance value range;
wherein the second correspondence table contains a one-to-one correspondence relationship between multiple resistance values between the first wire and the second wire and various types of analog welding torches.

5. The welding system according to claim 3, wherein the welding machine is further configured to recognize the welding torch as a common welding torch and enable the welding torch to be operated in a traditional common mode, when detecting that the analog plug-in module is not inserted into the first slot and that the digital plug-in module is not inserted into the second slot.

6. The welding system according to claim 2, wherein the welding torch type recognition circuit is provided with a first slot for receiving the analog plug-in module and a second slot for receiving the digital plug-in module, and is configured to be recognizable by the welding machine through the electrical signal between the first wire and the second wire, when detecting that the analog plug-in module is inserted into the first slot or detecting that the digital plug-in module is inserted into the second slot.

7. The welding system according to claim 2, wherein the input circuit comprises:
a filter sub-circuit configured to filter supply voltage signals provided by the welding machine; and
a rectifier sub-circuit configured to rectify the supply voltage signals and output direct current (DC) voltages;
a voltage stabilizer sub-circuit configured to read an average voltage value of the DC voltages output by the rectifier sub-circuit, determine whether the average voltage value reaches a preset DC voltage threshold value, and interrupt a voltage signal transmission between the input circuit and the welding torch type recognition circuit when the average voltage value is lower than the preset DC voltage threshold value; the voltage stabilizer sub-circuit is further configured to restore the voltage signal transmission between the input circuit and the welding torch type recognition circuit again when detecting that the DC voltage output by the rectifier sub-circuit reaches the preset DC voltage threshold value again;
a key sub-circuit connected to a welding torch switch through the first wire and the second wire.

8. A welding machine, **characterized in that**, an electrical signal connection is established between the welding machine and a welding torch through a first wire and a second wire, the welding machine is configured to supply power to the welding torch through the electric signal connection and recognize a type of the welding torch according to an electric signal received from the welding torch to obtain a welding torch type recognition result, and perform an adaptive adjustment on a specific function of the welding torch according to the welding torch type recognition result.

9. The welding machine according to claim 8, wherein one end of the first wire and one end of the second wire are connected to a welding torch port for connecting to the welding machine, the other end of the first wire and the other end of the second wire are connected to an input circuit of the welding torch.

10. The welding machine according to claim 8, wherein the welding machine is specifically configured to: trigger an execution of recognition operation on a type of the welding torch according to insertion conditions of a first slot and a second slot of the welding torch, obtain a welding torch type recognition result by looking up a table, and perform the adaptive adjustment on the specific function of the welding torch according to the welding torch type recognition result.

11. The welding machine according to claim 10, wherein the welding machine is specifically configured to:
check whether an electrical signal from the welding torch is received;
obtain a first welding torch type recognition result according to the electrical signal and a pre-stored first correspondence table, recognize the welding torch as a digital welding torch, and switch to a digital control mode, if the electrical signal from the welding torch is not received;
check whether there exists a resistance value between the first wire and the second wire, and read the resistance value existing between the first wire and the second wire, if the electrical signal from the welding torch is not received; look up the table according to the measured resistance value and a pre-stored second correspondence table to obtain a second welding torch type recognition result corresponding to the measured resistance value, and switch to an analog control mode, if the resistance value existing between the first wire and the second wire is read, and the resistance value is determined as being within a preset resistance value range; determine that the welding torch is not included in welding torches of specified product models/series, do not trigger the execution of the recognition operation on the type of the welding torch, and do not perform an adaptive adjustment operation on the specific function of the welding torch, if the resistance value between the first wire and the second wire is read, and it is confirmed that the resistance value exceeds the preset resistance value range;
the second correspondence table includes a one-to-one correspondence relationship between multiple resistance values between the first wire and the second wire and various types of analog welding torches.

12. The welding machine according to claim 10, wherein the welding machine is further configured to recognize the welding torch as a common welding torch so as to enable the welding torch to be operated in a traditional common mode, when it is detected that the analog plug-in module is not inserted into the first slot of the welding torch and the digital plug-in module is not inserted into the second slot of the welding torch.

13. A welding torch, including, but is not limited to, an MIG welding torch, a TIG welding torch, a push-pull wire welding torch, and a cutting torch, the welding torch comprising a welding torch control circuit, **characterized in that**, the welding torch control circuit comprises a welding torch type recognition circuit mounted in a welding torch handle, and an input circuit connected between the welding torch type recognition circuit and a welding machine;
wherein the input circuit comprises a first wire and a second wire configured to establish an electrical signal connection between the welding torch and the welding machine;
the welding torch type recognition circuit is provided with a first slot for receiving an analog plug-in module and a second slot for receiving a digital plug-in module, and is configured to be recognizable by the welding machine through an electrical signal between the first wire and the second wire, when detecting that the analog plug-in module is inserted into the first slot or detecting that the digital plug-in module is inserted into the second slot.

14. The welding torch according to claim 13, wherein one end of the first wire and one end of the second wire are connected to a welding torch port for connecting to the welding machine, the other end of the first wire and the other end of the second wire are connected to an input of the input circuit.

15. The welding torch according to claim 13, wherein the welding torch type recognition circuit further comprises an interface electrically connected to the analog plug-in module inserted into the first slot or the digital plug-in module inserted into the second slot.

16. A method for controlling a welding torch implemented on a welding machine, the welding torch comprising a welding torch control circuit, the welding torch control circuit comprising a welding torch type recognition circuit mounted in a welding torch handle, and an input circuit, the input circuit comprising a first wire and a second wire configured to establish an electrical signal connection between the welding machine and the welding torch, the welding torch type recognition circuit comprising a first slot for receiving an analog plug-in module and a second slot for receiving a digital plug-in module; **characterized in that**, the method comprises following steps of:
utilizing the electrical signal connection established between the welding machine and the welding torch to supply power to the welding torch, and recognizing a type of the welding torch according to an electrical signal received from the welding torch to obtain a welding torch type recognition result, and performing an adaptive adjustment on a specific function of the welding torch according to the welding torch type recognition result.

17. The method for controlling the welding torch according to claim 16, wherein the step of recognizing the type of the welding torch according to the electrical signal received from the welding torch to obtain the welding torch type recognition result, and performing the adaptive adjustment on the specific function of the welding torch according to the welding torch type recognition result comprises:
triggering an execution of a recognition operation on the type of the welding torch and obtaining the welding torch type recognition result by looking up a table, when detecting that the analog plug-in module is inserted into the first slot or detecting that the digital plug-in module is inserted into the second slot;
performing the adaptive adjustment on the specific function of the welding torch according to the welding torch type recognition result.

18. The method for controlling the welding torch according to claim 17, wherein the step of triggering the execution of the recognition operation on the type of the welding torch and obtaining the welding torch type recognition result by looking up the table, when detecting that the analog plug-in module is inserted into the first slot or detecting that the digital plug-in module is inserted into the second slot comprises:
checking whether the electrical signal from the welding torch type recognition circuit is received;
obtaining the first welding torch type recognition result according to the electrical signal and a pre-stored first correspondence table, recognizing the welding torch as a digital welding torch, and switching to a digital control mode, if the electrical signal from the welding torch type recognition circuit is received;
checking whether there exists a resistance value between the first wire and the second wire, and reading the resistance value existing between the first wire and the second wire, if the electrical signal from the welding torch type recognition circuit is not received; looking up the table according to the measured resistance value and a pre-stored second correspondence table to obtain a second welding torch type recognition result corresponding to the measured resistance value, and switching to the analog control mode, if the resistance value existing between the first wire and the second wire is read out and the resistance value is within a preset resistance value range; confirming that the welding torch is not included in welding torches of specified product models/series, do not triggering the execution of the recognition operation on the type of the welding torch, and do not performing an adaptive adjustment operation on the specific function of the welding torch, if the resistance value between the first wire and the second wire is read out and it is confirmed that the resistance value exceeds the preset resistance value range;
wherein the second correspondence table comprises a one-to-one correspondence relationship between multiple resistance values between the first wire and the second wire and various types of analog welding torches.

19. The method for controlling the welding torch according to claim 16, wherein the step of recognizing the type of the welding torch according to the electric signal received from the welding torch to obtain the welding torch type recognition result, and performing the adaptive adjustment on the specific function of the welding torch according to the welding torch type recognition result further comprises:
enabling the welding torch to be operated in a traditional common mode, when detecting that the analog plug-in module is not inserted into the first slot to be electrically connected to the welding torch type recognition circuit, and that the digital plug-in module is not inserted into the second slot to be electrically connected to the welding torch type recognition circuit.

20. The method for controlling the welding torch according to claim 16, wherein the step of utilizing the electrical signal connection to supply power to the welding torch comprises:
performing a filtering processing on supply voltage signals provided by the welding machine through a filter sub-circuit of the input circuit;
rectifying the supply voltage signals and outputting direct current (DC) voltages through a rectifier sub-circuit of the input circuit; and
reading an average voltage value of the DC voltages output by the rectifier sub-circuit, determining whether the average voltage value reaches a preset DC voltage threshold value, and interrupting a voltage signal transmission between the input circuit and the welding torch type recognition circuit when the average voltage value is lower than the preset DC voltage threshold value, and restoring the voltage signal transmission between the input circuit and the welding torch type recognition circuit by the voltage stabilizer sub-circuit of the input circuit, when detecting that the DC voltage output by the rectifier sub-circuit reaches the preset DC voltage threshold value again.
